# EUROPÄISCHE PATENTSCHRIFT

(11) **EP 1 527 524 B1**
(45) Veröffentlichungstag und Bekanntmachung des Hinweises auf die Patenterteilung: **09.02.2011**
(21) Anmeldenummer: 03787724.8
(22) Anmeldetag: 23.07.2003
(51) Int. Cl.: H04B 1/04

(54) **SENDEANORDNUNG, INSBESONDERE FÜR DEN MOBILFUNK**
TRANSMISSION ARRANGEMENT, ESPECIALLY FOR MOBILE TELEPHONY
SYSTEME DE TRANSMISSION, EN PARTICULIER POUR LA RADIOTELEPHONIE MOBILE

(30) Priorität: 29.07.2002 DE 10234657
(43) Veröffentlichungstag der Anmeldung: 04.05.2005
(73) Patentinhaber: Infineon Technologies AG, 85579 Neubiberg (DE)
(72) Erfinder: KROEBEL, Hans-Eberhard, 81735 München (DE); SIMON, Martin, 83624 Otterfing (DE)
(74) Vertreter: Viering, Jentschura & Partner
(86) Internationale Anmeldenummer: PCT/DE2003/002477
(87) Internationale Veröffentlichungsnummer: WO 2004/017530

(56) Entgegenhaltungen:
- US-A- 5 574 994
- US-A1- 2001 051 504
- ZHANG X ET AL: "A GAIN/PHASE IMBALANCE MINIMIZATION TECHNIQUE FOR LINC TRANSMITTER" 2001 IEEE MTT-S INTERNATIONAL MICROWAVE SYMPOSIUM DIGEST.(IMS 2001). PHOENIX, AZ, MAY 20 - 25, 2001, IEEE MTT-S INTERNATIONAL MICROWAVE SYMPOSIUM, NEW YORK, NY: IEEE, US, Bd. 2 OF 3, 20. Mai 2001 (2001-05-20), Seiten 801-804, XP001067388 ISBN: 0-7803-6538-0

## Beschreibung

Die vorliegende Erfindung betrifft eine Sendeanordnung, insbesondere für den Mobilfunk.

Im Mobilfunk werden anstelle von heterodynen Sendearchitekturen zunehmend homodyne Architekturen mit einer Direktumsetzung vom Basisband in eine hochfrequente Lage eingesetzt.

Wenn das Basisbandsignal als komplexwertiges, in eine Inphase- und eine dazu orthogonal stehende Quadraturkomponente zerlegtes Signal vorliegt, so ist zur Frequenzumsetzung des Modulationssignals auf eine Trägerfrequenz üblicherweise ein Quadraturmodulator oder Vektormodulator vorgesehen. Ein Vektormodulator umfaßt normalerweise zwei Gilbert-Mischerzellen. Dort wird das Nutzsignal auf eine Trägerfrequenz hochgemischt. Ein von einem Frequenzgenerator erzeugtes Trägersignal wird dabei einem der beiden Hochfrequenz-Mischer oder Multiplizierer unverändert, dem anderen um 90° phasenverschoben zugeführt. In einem den beiden Mischern nachgeschalteten Summierglied werden die Ausgangssignale miteinander zu einem Sendesignal verknüpft.

Bei einem derartigen Modulator ist es wünschenswert, eine ausreichende Trägerunterdrückung und Seitenbandunterdrückung zu erhalten.

Die Trägerunterdrückung wird jedoch normalerweise durch Offset-Spannungen verschlechtert, die beispielsweise durch bei Massenherstellung unvermeidliche Fehlanpassungen von Bauteilen entstehen können. Außerdem kann eine unzureichende Isolation zwischen Trägersignaleingang und Signalausgang des Modulators ein Übersprechen des Trägersignals und damit eine weitere Verschlechterung der Trägerunterdrückung bewirken. Aufgrund der immer größeren Bandbreiteanforderung, der zunehmenden Datenraten, den Forderungen nach immer geringerer Stromaufnahme und der Einführung neuer Modulationsverfahren werden die Anforderungen an die Trägerunterdrückung eines Modulators ständig erhöht. Beispielsweise ausgehend von dem Mobilfunkstandard GSM, Global System for Mobile Communication, erhöht das Modulationsverfahren 8-PSK (Phase Shift Keying, Phasenumtastung), welches gemäß dem GSM EDGE-System vorgesehen ist, die Linearitätsanforderungen und die Anforderungen an die Trägerunterdrückung.

Eine unzureichende Seitenbandunterdrückung kann sich normalerweise einerseits aus einer Abweichung des idealen Phasenunterschieds von 90° der Trägersignale für den Vektormodulator ergeben. Andererseits kann auch ein eventuell vorhandener Amplituden-Mismatch der Nutzsignalkomponenten zu einer Verschlechterung der Seitenbandunterdrückung führen.

In dem Dokument US 4,243,955 ist ein Verfahren zur verbesserten Trägerunterdrückung in Modulationssystemen angegeben. Dabei wird zusätzlich zum eigentlichen Trägersignal ein Quadratursignal erzeugt und zu dem modulierten Hochfrequenzsignal am Ausgang eines Modulators addiert. Ein eventuell durchscheinendes Trägersignal wird aufgrund der entgegengesetzten Phasenlagen unterdrückt.

Eine weitere Methode zur Vermeidung von Trägerübersprechen ist in dem Dokument US 5,574,994 angegeben. Dort wird ein moduliertes, hochfrequentes Sendesignal nach der Leistungsverstärkung in einem Rückkopplungspfad gedämpft, ins Basisband heruntergemischt, verstärkt und zum Inphase- und Quadratur-Zweig im Basisband entsprechend addiert.

Daneben sind auch Abgleichmethoden bei der Fertigung bekannt, bei denen mit Hilfe von Spektrumanalysatoren durch einen Abgleich der Basisbandsignale die Träger- und Seitenbandunterdrückung verbessert wird. Außerdem können durch entsprechende Vergrößerung der Flächen der verwendeten Bauteile sowie durch Layoutmaßnahmen beim Schaltungsentwurf die Offset-Spannungen in den Modulatorschaltungen reduziert werden.

Weiterhin ist es bekannt, das hochfrequente Modulationssignal nach Verstärkung mit einem Leistungsverstärker mit einer Schottky-Diode als Leistungsdetektor zu messen, dieses analoge in ein digitales Signal zu wandeln und die Trägerunterdrückung für den Abgleich der Basisbandsignale mit einem Digitalsignalprozessor rechnerisch zu ermitteln.

Den beschriebenen Methoden ist der Nachteil gemeinsam, daß ein verhältnismäßig hoher schaltungstechnischer Aufwand zur Implementierung derselben in integrierten Schaltungen erforderlich ist.

Aufgabe der vorliegenden Erfindung ist es, eine Sendeanordnung, insbesondere für den Mobilfunk, anzugeben, welche eine Verbesserung der Träger- und Seitenbandunterdrückung mit geringem Aufwand ermöglicht.

Erfindungsgemäß wird die Aufgabe gelöst durch eine Sendeanordnung, insbesondere für den Mobilfunk, aufweisend
- eine Basisband-Signalverarbeitungseinheit zur Aufbereitung eines Nutzsignals umfassend einen Inphase- und einen Quadraturpfad mit je einem Digital/Analog-Wandler,
- einen Frequenzumsetzer mit einem Inphase-Eingang, der mit dem Inphasepfad der Basisband-Signalverarbeitungseinheit gekoppelt ist, mit einem Quadratur-Eingang, der mit dem Quadraturpfad der Basisband-Signalverarbeitungseinheit gekoppelt ist, und mit einem Ausgang zur Bereitstellung eines modulierten, vom Nutzsignal abgeleiteten Signals und
- einen Rückkopplungspfad umfassend einen Analog/DigitalWandler mit einem Eingang, der über je einen Schalter an den Inphase-Eingang und an den Quadratur-Eingang des Frequenzumsetzers angeschlossen ist und mit einem Ausgang an dem Analog/Digital-Wandler, der an einen Steuereingang der Basisband-Signalverarbeitungseinheit angeschlossen ist zur Beeinflussung der Inphasekomponente oder der Quadraturkomponente des Nutzsignals.

Für den zur Trägerunterdrückung erforderlichen Trägerabgleich werden gemäß dem vorliegenden Prinzip die Offset-Spannungen und die Ströme des Inphase- und des Quadratur-Pfades am Eingang des Aufwärts-Frequenzumsetzers oder das Signal am Ausgang des Aufwärts-Frequenzumsetzers jeweils mit einem Analog/Digital-Wandler erfaßt.

Die Offset-Spannungen des Modulators können dadurch abgeglichen werden, daß in der digitalen Basisbandsignalverarbeitung ein digitaler Offset zur Amplitude der Inphase-Signalkomponente im Basisband oder zu der Quadraturkomponente des Nutzsignals im Basisband addiert wird. Der Abgleich der OffsetSpannung des Modulators bewirkt dabei die gewünschte Trägerunterdrückung.

Die Seitenbandunterdrückung wird dadurch vergrößert, daß in einem Kalibrierbetrieb im Basisband im Inphase-Pfad und im Quadraturpfad jeweils eine Spannung gleicher Amplitude angelegt wird. Wiederum wird mittels des A/D-Wandlers im Rückkopplungspfad ein Amplituden-Mismatch zwischen Inphase- und Quadratur-Pfad am Mischereingang oder am Ausgang des Mischers erfaßt. Der Abgleich erfolgt in Abhängigkeit von den gemessenen Signalen durch Verändern der Amplitude, das heißt der Verstärkung im Inphase-Pfad oder im Quadratur-Pfad der Basisbandsignalverarbeitungseinheit.

Bevorzugt können die ermittelten Werte für den Nutzsignal-Sendebetrieb mit moduliertem Basisband gespeichert werden.

Der Abgleich kann sowohl vor dem Senden eines hochfrequenten Signals, als auch während des Sendebetriebs erfolgen. Wenn der Abgleich während des Sendebetriebs erfolgen soll, so ist der Rückkopplungspfad an den Inphase- und den Quadratureingang des Frequenzumsetzers angeschlossen.

Da die Offset-Spannungen somit reduziert sind, aber zugleich von der Größe der verwendeten Bauteile abhängen, können gemäß dem vorliegenden Prinzip mit Vorteil kleinere Bauteile, besonders Transistoren und Widerstände, eingesetzt werden. Die für GSM EDGE und UMTS, Universal Mobile Telecommuncations Standard notwendige, verhältnismäßig hohe Trägerunterdrückung kann durch den mit vorliegendem Prinzip möglichen Modulatorabgleich erzielt werden. Dabei kann mit Vorteil auf Hochfrequenzdetektoren wie Schottkydioden, Richtkoppler et cetera verzichtet werden. Außerdem entfällt mit Vorteil ein aufwendiger manueller Abgleich des Mobilfunksenders bei der Produktion.

Das rückkoppelnde Meßsignal wird bevorzugt an Inphase- und Quadratur-Eingang des Frequenzumsetzers, der bevorzugt als Vektormodulator ausgebildet ist, an den Eingängen der betreffenden Multipliziererzellen gemessen. Hierzu ist der Rückkopplungspfad mit dem A/D-Wandler bevorzugt an den Nutzsignaleingängen der beiden Mischerzellen im Modulator angeschlossen.

Bevorzugt wird zur Rückkopplung und A/D-Wandlung ein Signal ausgekoppelt, welches proportional zur jeweiligen zu erfassenden Signalkomponente am Eingang des Hochfrequenzmischers ist.

Weiter bevorzugt wird an einem Stromeingang zum Zuführen eines der jeweiligen Nutzsignalkomponente entsprechenden Stromes ein Teil dieser Ströme ausgekoppelt und mit dem A/D-Wandler gemessen.

Die Stromauskopplung erfolgt bevorzugt in einem jeweiligen Stromspiegel zur Speisung der Mischerzellen mit den IQ-Signalkomponenten, wobei weiter bevorzugt der Ausgangstransistor des Stromspiegels doppelt ausgeführt ist und der Zusatztransistor einen Ausgangsanschluß hat, der mit dem A/D-Wandler gekoppelt ist. Zur Kopplung sind wie erläutert bevorzugt Schalter vorgesehen.

Weitere Einzelheiten und vorteilhafte Ausgestaltungen der vorliegenden Erfindung ergeben sich aus den Unteransprüchen.

Die Erfindung wird nachfolgend anhand von Ausführungsbeispielen an mehreren Zeichnungen erläutert. Es zeigen:
- Figur 1: ein Blockschaltbild einer beispielhaften Ausfüh- rungsform des vorliegenden Prinzips anhand einer Sendeanordnung,
- Figur 2: den Vektormodulator von Figur 1 mit bevorzugter Stromauskopplung an den Mischereingängen anhand ei- nes beispielhaften Schaltplans und
- Figur 3: eine beispielhafte, alternative Ausführungsform des Blockschaltbilds einer Sendeanordnung von Figur 1.

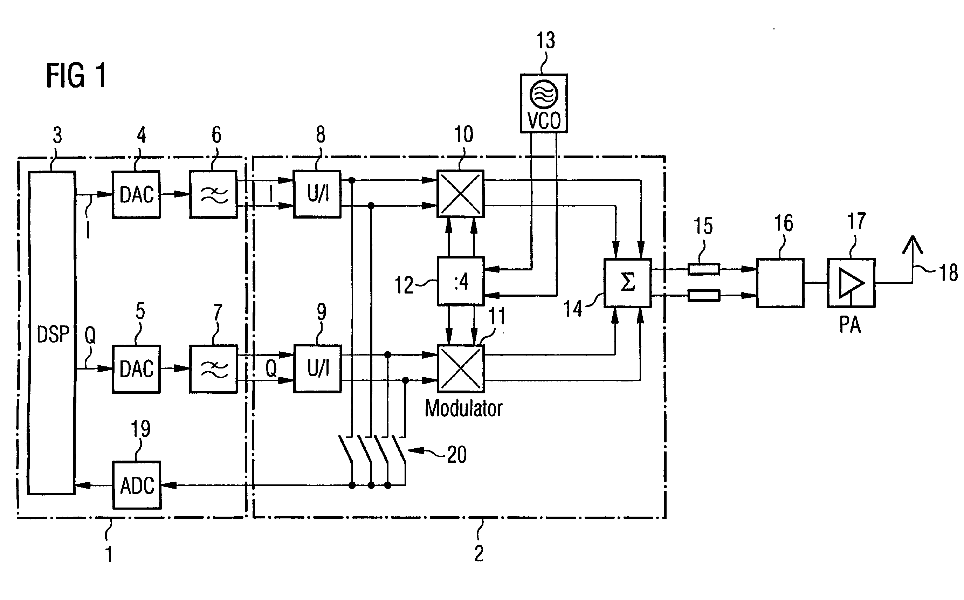

Figur 1 zeigt einen Mobilfunksender mit homodyner Architektur gemäß dem vorliegenden Prinzip. Dieser umfaßt einen Basisbandblock 1 und einen Hochfrequenzblock 2.

Im Basisbandblock 1 ist eine digitale Basisband-Signalverarbeitungseinheit 3 vorgesehen mit einem Inphase-Ausgang und einem Quadraturausgang, an die ein Inphase-Signalpfad I und ein Quadratur-Signalpfad Q angeschlossen sind zur Übertragung von komplexwertigen Signalkomponenten des Nutzsignals. Die Basisband-Signalverarbeitungseinheit 3 ist als digitaler Signalprozessor ausgeführt. An die beiden Ausgänge sind in I- und Q-Pfad jeweils Digital/Analog-Wandler 4, 5 angeschlossen, denen ausgangsseitig je ein Tiefpaßfilter 6, 7 nachgeschaltet ist. Die Ausgänge der Tiefpaßfilter 6, 7 sind symmetrisch ausgebildet zur Führung von Differenzsignalen und bilden Inphase- und Quadraturausgang des Basisbandblocks 1.

An diese Ausgänge des Basisbandblocks sind sowohl im Inphaseals auch im Quadratursignalpfad I, Q Spannungs/Strom-Wandler 8, 9 angeschlossen, die im Hochfrequenzblock 2 angeordnet sind. Diese sind mit ihren Ausgängen mit den ersten Eingängen von je einem Hochfrequenzmischer 10, 11 in einem Vektormodulator 10, 11, 12, 14 verbunden. Zweite Eingänge der Hochfrequenzmischer 10, 11, die wie die ersten Eingänge der Mischer 10, 11 symmetrisch ausgebildet sind, sind über einen Frequenzteiler 12 an einen spannungsgesteuerten Oszillator 13, der als Trägerfrequenzgenerator arbeitet, angeschlossen. Die Ausgänge der Mischerzellen 10, 11 sind mit Eingängen eines Summiergliedes 14 verbunden, dessen symmetrischer Ausgang den Ausgang des Hochfrequenzblocks 2 bildet.

Über Koppelelemente 15, einen nachgeschalteten Balanced/Unbalanced-Konverter 16, der das symmetrische in eine unsymmetrisches Signal konvertiert, sowie eine LeistungsEndstufe 17 ist eine Antenne 18 an den Ausgang des Vektormodulators und damit den Ausgang des Summierglieds 14 angekoppelt. Der Vektormodulator umfaßt demnach den Frequenzteiler 12, die beiden Frequenzmischer 10, 11 sowie das Summierglied 14.

Weiterhin ist gemäß vorliegendem Prinzip ein Rückkopplungspfad vorgesehen, der einen Analog/Digital-Wandler 19 umfaßt. Der Eingang des A/D-Wandlers 19 ist über insgesamt vier Schalter 20 mit jeweils zugeordneten symmetrischen ersten Signaleingängen der beiden Mischer 10, 11 verbunden. Somit werden insgesamt vier Signale, vorliegend Stromsignale, ausgekoppelt und mit dem A/D-Wandler in ein digitales Signal konvertiert. Dieses Signal, welches mehrere oder teilweise verknüpfte Einzelsignale umfassen kann, wird dem digitalen Signalprozessor 3 zur Offset-korrigierenden Beeinflussung von Inphase- oder Quadraturpfad zugeführt. Alternativ oder zusätzlich können anstelle von Offsets des Inphase- oder Quadratursignals auch die Amplituden in Inphase- oder Quadraturzweig verstellt werden, so daß zusätzlich zu oder alternativ zu einer Trägerunterdrückung mit den ausgekoppelten und digitalisierten Stromdaten eine verbesserte Seitenbandunterdrückung erzielt wird.

Gemäß Figur 1 wird ein eventuell vorhandener Offset im niederfrequenten linearen Basisbandsignal direkt im Vektormodulator 10, 11, 12, 14 unmittelbar am Eingang der Verknüpfung des Basisbandsignals mit den Quadraturtransistoren der Mischer gemessen und abgeglichen. Das Durchsprechen des Trägersignals, das durch Offsets im Basisbandsignal entsteht, und das unerwünschte Modulatorseitenband, welches durch Amplituden-Mismatches zwischen Inphase- und Quadraturpfad entsteht, kann so signifikant verringert werden. Der hierzu erforderliche schaltungstechnische Aufwand ist dabei besonders gering.

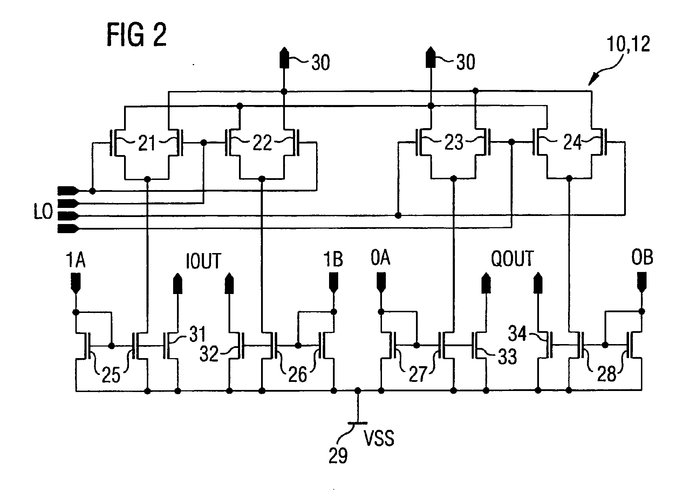

Figur 2 zeigt die zur symmetrischen Signalverarbeitung ausgelegten Hochfrequenzmischer 10, 11 von Figur 1 einschließlich Summierglied 14 anhand eines beispielhaften Schaltplans. Dabei sind aufgrund der symmetrischen oder differenziellen Signalverarbeitung im Modulator insgesamt vier in MOS-Schaltungstechnik aufgebaute Mischerzellen 21, 22, 23, 24 vorgesehen, welche je zwei n-Kanal-MOS-Feldeffekttransistoren umfassen, welche paarweise sourceseitig unmittelbar miteinander verbunden sind. Diesen wird, wie bei Quadraturmodulatoren üblich, an den miteinander verkoppelten Gate-Anschlüssen an insgesamt vier Eingangsklemmen ein in Inphase- und Quadraturkomponente zerlegtes und jeweils als differenzielles Signal zugeführtes Trägersignal oder Lokaloszillatorsignal LO eingespeist. Hierfür ist an die vier Eingangsklemmen der in Figur 2 nicht dargestellte Durch-Vier-Frequenzteiler 12 von Figur 1 angeschlossen.

Die acht Drain-Anschlüsse der Mischerzellen 21, 22, 23, 24 sind wie bei Vektormodulatoren üblich miteinander zur Bildung des symmetrischen Ausgangs 30 signalsummierend miteinander verknüpft.

An den ebenfalls miteinander verkoppelten Sourceknoten der vier Mischerzellen 21, 22, 23, 24 wird über je einen Stromspiegel 25, 26, 27, 28, der mit seinem Ausgangstransistor an dem jeweiligen gemeinsamen Sourceknoten der zugeordneten Mischerzelle angeschlossen ist, an ebenfalls vier Eingangsklemmen das wiederum in Inphase- und Quadraturkomponenten in differenzieller Form vorliegende Nutzsignal, welches bereits als Stromsignal vorliegt, eingespeist. Die Stromspiegel 25 bis 28 umfassen je einen n-Kanal-Feldeffekttransistor, der als Diode verschaltet ist und als Eingangstransistor arbeitet, und je einen Ausgangstransistor, dessen Gate-Anschluß mit dem zugeordneten, als Diode verschalteten Transistor an dessen Gate-Anschluß verbunden ist. Sourceseitig sind Eingangs- und Ausgangstransistor der Stromspiegel mit einem Bezugspotentialanschluß 29 unmittelbar verbunden.

Eine Besonderheit bei vorliegendem Vektormodulator ist es, daß zu den Ausgangstransistoren der Stromspiegel 25 bis 28 an deren Gate-Anschlüssen jeweils mit seinem Gate-Anschluß ein Zusatztransistor 31, 32, 33, 34 zugeschaltet ist, der der Stromauskopplung und -rückkopplung dient. Die Zusatztransistoren sind wie die Stromspiegeltransistoren als n-Kanal-Feldeffekt-Transistoren ausgeführt und sourceseitig mit Bezugspotentialanschluß 29 unmittelbar verbunden.

Die Drain-Anschlüsse der Zusatztransistoren 31, 32, 33, 34 bilden die Stromauskoppelanschlüsse des Modulators, die an den Rückkopplungspfad von Figur 1 über Schalter 20 an A/D-Wandler 19 angeschaltet sind. Die Transistoren 31, 32 bilden den symmetrischen Inphase-Ausgang IOUT und die Transistoren 33, 34 bilden den ebenfalls symmetrischen Quadraturausgang QOUT des Vektormodulators an den Eingängen der Multiplizierer.

Die differenziellen, in komplexwertige Komponenten zerlegten Basisbandsignals werden über die Stromspiegel 25 bis 28 den Quadraturmischertransistoren 21 bis 24 zugeführt und dort mit dem Lokaloszillatorsignal gemischt. Über die parallelen Ausgangstransistoren Transistoren 31 bis 34 wird ein Teil der Basisbandströme ausgekoppelt und der Spannungsabfall an je einem hier nicht eingezeichneten Widerstand mit einem A/D-Wandler gemessen. Bei der Layoutentwicklung bilden diese Transistoren 31 bis 34 bevorzugt eine Einheit mit den Ausgangstransistoren der Stromspiegel 25 bis 28, um eine enge Paarungstoleranz der Transistoren sicherzustellen.

Man erkennt deutlich, daß das Auskoppeln der Signale ohne aufwendige zusätzliche Bauteile wie Schottky-Dioden und Richtkoppler erfolgen kann. Mit Vorteil ist das Prinzip deshalb mit geringem Aufwand realisierbar und besonders für Massenherstellung von Mobilfunkgeräten geeignet.

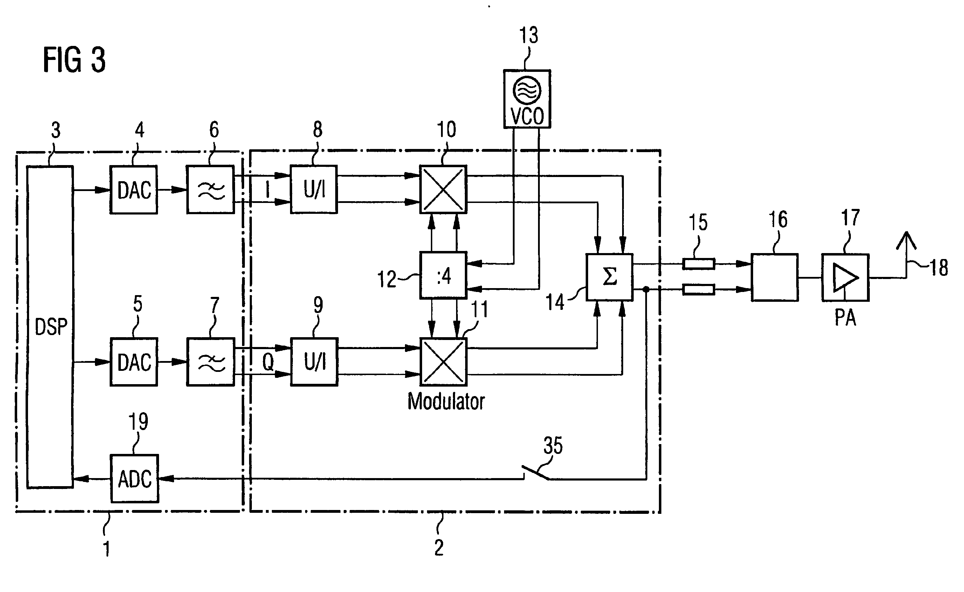

Figur 3 zeigt eine alternative Ausführungsform der Sendeanordnung von Figur 1. Dieses stimmt weitgehend mit dem Blockschaltbild von Figur 1 in Aufbau und Wirkungsweise überein und dessen Beschreibung soll daher insoweit an dieser Stelle nicht wiederholt werden. Unterschiedlich ist lediglich der Anschluß des Rückkopplungspfades mit dem Analog/DigitalWandler 19, der gemäß Figur 3 nicht über vier Schalter 20 an die Eingänge der Mischerzellen 10, 11 angeschlossen ist, sondern an einen Ausgang des Vektormodulators 10, 11, 12, 14, genauer des Verknüpfungsglieds 14 am Ausgang des Vektormodulators. Dort ist der Rückkopplungspfad angeschlossen und führt über einen Schalter 35 und über den A/D-Wandler 19 zu der digitalen Basisband-Signalverarbeitungseinheit 3.

### Bezugszeichenliste

- 1: Basisbandblock
- 2: Hochfrequenzblock
- 3: digitale Signalverarbeitungseinheit
- 4: DA-Wandler
- 5: DA-Wandler
- 6: Tiefpaß
- 7: Tiefpaß ,
- 8: Strom/Spannungs-Konverter
- 9: Strom/Spannungs-Konverter
- 10: Multiplizierer
- 11: Multiplizierer
- 12: Frequenzteiler
- 13: spannungsgesteuerter Oszillator
- 14: Summierglied
- 15: Koppelelement
- 16: BALUN
- 17: Leistungsstufe
- 18: Antenne
- 19: AD-Wandler
- 20: Schalter
- 21: Differenzverstärker
- 22: Differenzverstärker
- 23: Differenzverstärker
- 24: Differenzverstärker
- 25: Stromspiegel
- 26: Stromspiegel
- 27: Stromspiegel
- 28: Stromspiegel
- 29: Bezugspotentialanschluß
- 30: Modulatorausgang
- 31: Zusatztransistor
- 32: Zusatztransistor
- 33: Zusatztransistor
- 34: Zusatztransistor
- 35: Schalter
- IOUT: Stromauskoppelanschluß Inphase
- LO: Lokaloszillatoranschluß
- QOUT: Stromauskoppelanschluß Quadratur

## Patentansprüche

1. Sendeanordnung, insbesondere für den Mobilfunk, aufweisend
- eine Basisband-Signalverarbeitungseinheit (3) zur Aufbereitung eines Nutzsignals umfassend einen Inphase- und einen Quadraturpfad (I, Q) mit je einem angeschlossenen Digital/Analog-Wandler (4, 5),
- einen Frequenzumsetzer (10, 11, 14) mit einem Inphase-Eingang, der mit dem Inphasepfad (I) gekoppelt ist, mit einem Quadratur-Eingang, der mit dem Quadraturpfad (Q) der Basisband-Signalverarbeitungseinheit (3) gekoppelt ist, und mit einem Ausgang zur Bereitstellung eines modulierten, vom Nutzsignal abgeleiteten Signals und
- einen Rückkopplungspfad umfassend einen Analog/DigitalWandler (19) mit einem Eingang, der über je einen Schalter (20) an den Inphase-Eingang und an den Quadratur-Eingang des Frequenzumsetzers (10, 11, 14) angeschlossen ist, und mit einem Ausgang an dem Analog/Digital-Wandler (19), der an einen Steuereingang der Basisband-Signalverarbeitungseinheit (3) angeschlossen ist zur Beeinflussung der Inphasekomponente oder der Quadraturkomponente des Nutzsignals.

2. Sendeanordnung nach Anspruch 1,
**dadurch gekennzeichnet, daß** der Frequenzumsetzer (10, 11, 14) als Quadraturmodulator ausgebildet ist, umfassend
- einen ersten Hochfrequenzmischer (10) mit einem ersten Eingang, der an den Inphase-Eingang angeschlossen ist, und mit einem zweiten Eingang zur Zuführung eines Trägersignals,
- einen zweiten Hochfrequenzmischer (11) mit einem ersten Eingang, der an den Quadratur-Eingang angeschlossen ist, und mit einem zweiten Eingang zur Zuführung eines Trägersignals und
- ein Summierglied (14), welches mit seinen Eingängen an Ausgänge der Hochfrequenzmischer (10, 11) angeschlossen ist und dessen Ausgang den Ausgang des Frequenzumsetzers (10, 11, 14) bildet, wobei
- der Eingang des Analog/Digital-Wandlers (19) über je einen Schalter (20) an die ersten Eingänge der beiden Hochfrequenzmischer (10, 11) angeschlossen ist.

3. Sendeanordnung nach Anspruch 2,
**dadurch gekennzeichnet, daß** der erste Hochfrequenzmischer (10) und der zweite Hochfrequenzmischer (11) jeweils an ihren ersten Eingängen ein Mittel zum Auskoppeln eines zu dem Eingangssignal proportionalen Signals umfassen.

4. Sendeanordnung nach Anspruch 3,
**dadurch gekennzeichnet, daß** an die ersten Eingänge der Hochfrequenzmischer (10, 11) jeweils eine gesteuerte Stromquelle zur Stromeinspeisung von Mischerzellen (21, 22, 23, 24) angeschlossen ist, mit einem Steuereingang, der mit dem Steuereingang einer jeweils zugeordneten Zusatzstromquelle (31, 32, 33, 34) verbunden ist zum Bereitstellen des zu dem Eingangssignal proportionalen Signals an jeweiligen Auskoppelknoten der Zusatzstromquelle (31, 32, 33, 34).

5. Sendeanordnung nach Anspruch 4,
**dadurch gekennzeichnet, daß** die gesteuerten Stromquellen als Transistor in je einem Stromspiegel (25, 26, 27, 28) ausgebildet sind, wobei die Stromspiegel (25, 26, 27, 28) jeweils den Transistor und eine daran angeschlossene Transistordiode zur Ansteuerung des Transistors umfassen, und daß die Zusatzstromquellen (31, 32, 33, 34) als Transistor ausgebildet sind, dessen Steuereingang an die Transistordiode angeschlossen ist.

6. Sendeanordnung nach Anspruch 4 oder 5,
**dadurch gekennzeichnet, daß** zwischen die ersten Eingänge des ersten und des zweiten Hochfrequenzmischers (10, 11) und die Digital/Analog-Wandler (4, 5) im Inphase- und Quadraturpfad (I, Q) jeweils ein Spannungs-/Stromwandler (8, 9) geschaltet ist.

## Claims

1. Transmission arrangement, in particular for mobile radio, comprising
- a baseband signal processing unit (3) for the conditioning of a useful signal comprising an inphase and a quadrature path (I, Q) having each a connected digital/analog converter (4, 5),
- a frequency converter (10, 11, 14) having an inphase input which is coupled to the inphase path (I) having a quadrature input coupled with the quadrature path (Q) of the baseband signal processing unit (3) und having an output for provision of a modulated signal derived from the useful signal and
- a feedback path comprising an analog/digital converter (19) having an input which is coupled by means of a respective switch (20) to the inphase input and the quadrature input of the frequency converter (10, 11, 14) and having an output at the analog/digital converter (19) which is coupled to a control input of the baseband signal processing unit (3) for manipulation of the inphase component or the quadrature component of the useful signal.

2. Transmission arrangement according to claim 1, **characterized in that**
the frequency converter (10, 11, 14) is designed as a quadrature modulator including
- a first high frequency mixer (10) having a first input which is coupled to the inphase input and having a second input for supplying a carrier signal,
- a second high frequency mixer (11) having a first input which is coupled to the quadrature input and having a second input for supplying a carrier signal and
- a summing element (14) which is coupled with its inputs to outputs of the high frequency mixers (10, 11) and whose output forms the output of the frequency converter (10, 11, 14) wherein
- the input of the analog/digital converter (19) is coupled by means of a respective switch (20) to the first inputs of the two high frequency mixers (10, 11).

3. Transmission arrangement according to claim 2, **characterized in that**
the first high frequency mixer (10) and the second high frequency mixer (11) each comprise at their first inputs a means for coupling out a signal proportional to the input signal.

4. Transmission arrangement according to claim 3, **characterized in that**
to the first inputs of the high frequency mixers (10, 11) in each case a controlled current source for current injection of mixing cells (21, 22, 23, 24) is coupled having a control input which is coupled to a respectively associated additional current source (31, 32, 33, 34) for provision of the signal proportional to the input signal at respective out-coupling nodes of the additional current source (31, 32, 33, 34).

5. Transmission arrangement according to claim 4, **characterized in that**
the controlled current sources are formed as transistors in, in each case, a current mirror (25, 26, 27, 28) wherein the current mirrors (25, 26, 27, 28) in each case comprise the transistor and a transistor diode connected thereto for control of the transistor and **in that** the additional current sources (31, 32, 33, 34) are formed as transistor whose control input is connected to the transistor diode.

6. Transmission arrangement according to claim 4 or 5, **characterized in that** between the first inputs of the first and the second high frequency mixer (10, 11) and the digital/analog-converter (4, 5) in the inphase and quadrature path (I, Q) a voltage/current converter (8, 9) is connected.

## Revendications

1. Dispositif d'émission notamment pour la téléphonie mobile, comportant
- une unité (3) de traitement du signal en bande de base pour la préparation d'un signal utile comprenant un trajet (I) en phase et un trajet (Q) en quadrature ayant respectivement un convertisseur (4, 5) numérique/analogique raccordé,
- un convertisseur (10, 11, 14) de fréquence ayant une entrée en phase qui est couplée au trajet (1) en phase, ayant une entrée en quadrature qui est couplée au trajet (Q) en quadrature de l'unité (3) de traitement du signal en bande de base, et ayant une sortie pour disposer d'un signal modulé dérivé du signal utile, et
- un trajet de réaction comprenant un convertisseur (19) analogique/numérique ayant une entrée, qui est reliée à l'entrée en phase et à l'entrée en quadrature du convertisseur (10, 11, 14) de fréquence par respectivement un interrupteur (20), et ayant une sortie sur le convertisseur (19) analogique/numérique, qui est reliée à une entrée de commande de l'unité (3) de traitement du signal en bande de base pour influer sur la composante en phase ou la composante en quadrature du signal utile.

2. Dispositif d'émission suivant la revendication 1,
**caractérisé en ce que**
le convertisseur (10, 11, 14) de fréquence est constitué en modulateur en quadrature comprenant
- un premier mélangeur (10) de haute fréquence ayant une première entrée qui est reliée à l'entrée en phase et ayant une deuxième entrée pour l'envoi d'un signal porteur,
- un deuxième mélangeur (11) de haute fréquence ayant une première entrée qui est reliée en quadrature et ayant une deuxième entrée pour l'envoi d'un signal porteur, et
- un élément (14) sommateur qui est relié par ses entrées à des sorties des mélangeurs (10 11) de haute fréquence et dont la sortie forme la sortie du convertisseur (10, 11, 14) de fréquence, dans lequel
- l'entrée du convertisseur (19) analogique/numérique est reliée aux premières entrées des deux mélangeurs (10, 11) de haute fréquence par respectivement un interrupteur (20).

3. Dispositif d'émission suivant la revendication 2,
**caractérisé en ce que** le premier mélangeur (10) de haute fréquence et le deuxième mélangeur (11) de haute fréquence comprennent respectivement sur leur première entrée un moyen de sortie d'un signal proportionnel au signal d'entrée.

4. Dispositif d'émission suivant la revendication 3,
**caractérisé en ce qu'**aux premières entrées des mélangeurs (10, 11) de haute fréquence est raccordée respectivement une source de courant commandée pour l'injection de courant de cellules (21, 22, 23, 24) de mélangeur, comprenant une entrée de commande, qui est reliée à l'entrée de commande d'une source (31, 32, 33, 34) de courant supplémentaire respective pour disposer du signal proportionnel au signal d'entrée sur les noeuds de sortie respectifs de la source (31, 32, 33, 34) de courant supplémentaire.

5. Dispositif d'émission suivant la revendication 4,
**caractérisé en ce que** les sources de courant commandées sont sous la forme de transistor dans respectivement un miroir (25, 26, 27, 28) de courant, les miroirs (25, 26, 27, 28) de courant comprenant respectivement le transistor et une diode de transistor, qui est raccordée pour commander le transistor, et **en ce que** les sources (31 32 33 34) de courant supplémentaires sont constituées sous la forme de transistors dont l'entrée de commande est reliée à la diode de transistor.

6. Dispositif d'émission suivant la revendication 4 ou 5,
**caractérisé en ce que** respectivement un convertisseur (8, 9) tension/courant est monté entre les premières entrées du premier et du deuxième mélangeur (10 11) de haute fréquence et les convertisseurs (4, 5) numériques/analogiques dans le trajet (I) en phase et dans le trajet (Q) en quadrature.
